# EUROPEAN PATENT SPECIFICATION

(11) **EP 3 300 191 B1**
(45) Date of publication and mention of the grant of the patent: **18.05.2022**
(21) Application number: 17185165.2
(22) Date of filing: 07.08.2017
(51) Int. Cl.: H01S 3/067, H01S 3/10, H01S 3/106, H01S 3/11

(54) **A SATURABLE ABSORBER AND A METHOD OF MODE-LOCKING IN A LASER**
SÄTTIGBARER ABSORBER UND VERFAHREN ZUR MODENKOPPLUNG IN EINEM LASER
ABSORBEUR SATURABLE ET PROCÉDÉ DE BLOCAGE DE MODE DANS UN LASER

(30) Priority: 26.09.2016 PL 41881416
(43) Date of publication of application: 28.03.2018
(73) Proprietor: Instytut Chemii Fizycznej Polskiej Akademii Nauk, 01-224 Warszawa (PL)
(72) Inventor: Stepanenko, Yuriy, 01-485 Warszawa (PL); Szczepanek, Jan, 98-200 Chojne (PL); Kardas, Tomasz, 02-443 Warszawa (PL); Nejbauer, Michal, 05-311 Debe Wielkie (PL); Radzewicz, Czeslaw, 02-798 Warszawa (PL)
(74) Representative: JD&P Patent Attorneys Joanna Dargiewicz & Partners

(56) References cited:
- EP-A1- 1 720 223
- US-A1- 2006 045 536
- US-A1- 2012 263 197
- US-A1- 2016 248 217
- BOIVINET SIMON ET AL: "All-Fiber 1- \(\mu \) m PM Mode-Lock Laser Delivering Picosecond Pulses at Sub-MHz Repetition Rate", IEEE PHOTONICS TECHNOLOGY LETTERS, IEEE SERVICE CENTER, PISCATAWAY, NJ, US, vol. 26, no. 22, 15 November 2014 (2014-11-15), pages 2256-2259, XP011561947, ISSN: 1041-1135, DOI: 10.1109/LPT.2014.2354455 [retrieved on 2014-10-17]

## Description

The invention relates to a saturable absorber and a method of mode-locking, especially for use in ultrafast fiber lasers manufactured with polarization maintaining (PM) fibers.

Saturable absorbers used for stabilizing pulse mode in laser cavities are classified as material ones and non-material ones. The first of them make use of a property of saturation of optical absorption process for some materials being irradiated with high-intensity laser light. In the case of using a material saturable absorber (as a layer of material applied onto a mirror or an optical fiber), the losses for lower intensity radiation (continuous wave (CW) operation) are higher than the losses for higher intensity radiation (pulsed operation). In such a situation, the pulse mode of laser operation is preferred, being identical with mode-locking. Unfortunately, material saturable absorbers subjected to high-intensity laser radiation tend to be less stable and lose their properties with time. As a result, the laser characteristics change in time, and the laser itself finally ceases to operate. The second type of saturable absorbers comprises non-material (artificial) saturable absorbers, that are based on fundamental physical phenomena, such as light interference and non-linear response of a dielectric to a high-amplitude electric field. An example of such saturable absorbers may be the one making use of phenomenon of nonlinear polarization evolution (NPE) [1] or socalled nonlinear optical loop mirror (NOLM) based on pulse interference [2], as well as its modification, nonlinear amplifying loop mirror (NALM) [3].

Boivinet Simon et al. " All-Fiber 1 mum PM Mode-Lock Laser Delivering Picosecond Pulses at Sub-MHz Repetition Rate", IEEE Photonics Tech. Letters, IEEE, vol. 26, no. 22, 15 November 2014, p. 2256-2259, XP011561947 discloses a saturable absorber in a 16.6 ps-fiber-laser, comprising PM-fiber PM980, a polarizer turned by α=24° to the SA of PM980 fiber and a Faraday mirror which reflects the pulse and rotates the polarization of 90°.

EP 1 720 223 A1 discloses a saturable absorber in a femtosecond fiber laser, comprising: a PM fiber section, a polarizer oriented at 40° and a Faraday mirror which reflects the pulse and rotates the polarization of 90°.

In patent application US2012263197A1 was disclosed a power selective optical filter device including an input polarizer for selectively transmitting an input signal. The device includes a wave-plate structure positioned to receive the input signal, which includes at least one substantially zero-order, zero-wave plate. The zero-order, zero-wave plate is configured to alter a polarization state of the input signal passing in a manner that depends on the power of the input signal. The zero-order, zero-wave plate includes an entry and exit wave plate each having a fast axis, with the fast axes oriented substantially perpendicular to each other. Each entry wave plate is oriented relative to a transmission axis of the input polarizer at a respective angle. An output polarizer is positioned to receive a signal output from the wave-plate structure and selectively transmits the signal based on the polarization state.

Use of polarization maintaining (PM) fibers in fiber lasers is preferred due to resistance to external factors, such as temperature and mechanical concussions. Until now, material saturable absorbers and various modifications of NOLM (NALM) have been used in ultrafast all-fiber lasers constructed entirely based on PM fibers with pulse duration of <1 ps and a linear or ring cavity geometry. Nonlinear polarization evolution in PM fiber cavities was deemed impossible, especially for configurations with ring laser cavities. The main reason for maintaining this opinion was the presence of large birefringence in PM fibers, resulting in large group velocity mismatch (GVM) of perpendicular light pulses having "fast" polarization and "slow" polarization. This phenomenon is also known as effect of polarization mode dispersion (PM D). A pulse having some assigned polarization, on entering the PM fiber, divides into two pulses (fast and slow, respectively) overlapping in time. These two pulses of perpendicular polarizations move at different velocities, and at high GVM value they quickly lose their time overlap. On the other hand, the presence of two pulse copies traveling in the cavity is inadmissible, since makes the pulse formation process in the cavity instable.

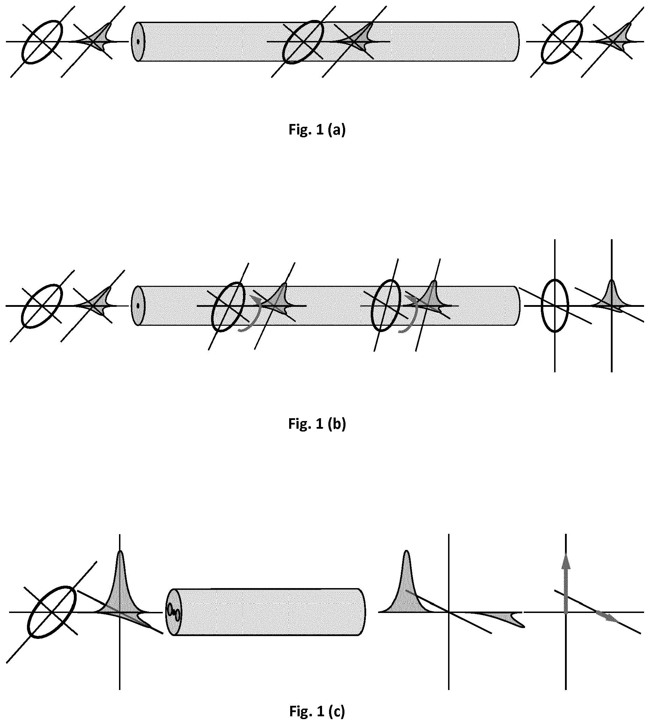

The operation principle of a saturable absorber based on NPE in a fiber not maintaining polarization is shown in fig. 1. Fig. 1 (a) illustrates propagation of light of elliptical polarization in an isotropic dielectric showing no Kerr effect (low light intensity regime, where nonlinear effects may be neglected). Each polarization component moves at the same phase velocity with no change of light polarization state at the output of the dielectric. In such a situation, if a polarizer is added downstream the fiber, then the light intensity at the polarizer output does not depends on the intensity of the incident radiation.

Fig. 1 (b) illustrates a case of propagation in a dielectric having non-zero value of nonlinear (intensity dependent) refractive index. The phase velocity of the polarization component of higher intensity will be lower as a result of the Kerr effect. The difference of phase velocities will result in evolution of the light polarization state at the dielectric output. The higher the input light intensity, the higher polarization evolution can be achieved. After inserting an additional polarizer into light beam track, one achieves intensity modulation at output which depends on light intensity at input.

When an isotropic medium, being an ordinary unimodal telecommunication fiber, is directly replaced with a polarization maintaining fiber that exhibits high birefringence, the mechanism of saturable absorption based on NPE stops working. In addition to a nonlinear phase shift in PM fibers, the GVM effect occurs: light moving along fast and slow fiber axis has different group velocities, and it does not form one pulse of elliptical polarization at the fiber output; instead, two independent light pulses of linear polarization are formed (fig. 1 (c)).

Attempts to realize PM NPE in linear laser cavities demonstrated limitation of this method to generating only spectrally narrow-band pulses having a duration of several to several dozens of picoseconds [4]-[7]. Realization of femtosecond operating mode has been constrained by high value of GVM (PMD). In the cited, known solution, upstream the arrangement of saturable absorber PM-NPE, the pulse moves in PM fiber and has linear polarization parallel to one of the axes (the fast one or the slow one) of the fiber. The NPE arrangement is a PM fiber turned by some angle a with respect to the direction of input polarization (that is enforced by the PM fiber fragment preceding the NPE arrangement). In such a situation, the input pulse is decomposed into two perpendicular polarizations (along the fast and slow axis, respectively, of the PM fiber in NPE arrangement). The ratio of energy distribution between two pulses depends on the angle a. Subsequently, two polarization components propagate at different group velocities in a PM fiber, interacting each other in a nonlinear manner. At the output of NPE arrangement, the pulses go to the next PM fiber having the fast axis parallel to the axis of fiber present upstream the NPE arrangement.

It is unexpectedly found that dividing the PM fiber into a number of shorter sections, of which the first one is turned by some angle a with respect to the direction of input polarization (that is enforced, e.g., by a PM fiber upstream to the NPE arrangement), and each next is turned by 90 degrees about the axis of the fiber with respect to the former one, allows considerably compensate the GVM effect.

The object of the invention is a saturable absorber based on non-linear polarization evolution NPE, as defined in claim 1. Preferred embodiments are defined in the appended dependent claims.

The total length of first PM fiber section and all sections with birefringent axes parallel to the birefringent axes of first section is equal to the total length of all sections with birefringent axes turned by 90 degrees with respect to the birefringent axes of first section. Preferably, one of the fiber sections is doped with active ions, preferably of erbium or ytterbium, and is adjusted to separate pumping with a laser diode.

Preferably, the saturable absorber contains pulse reversing means evolving its polarization arranged downstream the last fiber section of arrangement of sections of a polarization maintaining PM fiber.

Preferably, the pulse reversing means comprise a Faraday mirror between the mirror and the last fiber section.

The object of the invention is also a method of mode-locking in a fiber laser, as defined in claim 6.

Now the invention will be discussed with reference to the drawing figures, that present the following:
Fig. 1: (a, b) A phenomenon of nonlinear polarization evolution in a conventional fiber not maintaining light polarization, in a regime of (a) low, and (b) high light intensity. In the regime of high intensity, there is a polarization evolution caused by phase shift resulting from the medium nonlinearity (Kerr effect). (c) A phenomenon of separating the pulse having elliptical polarization into two pulses having perpendicular polarizations in a polarization maintaining fiber.

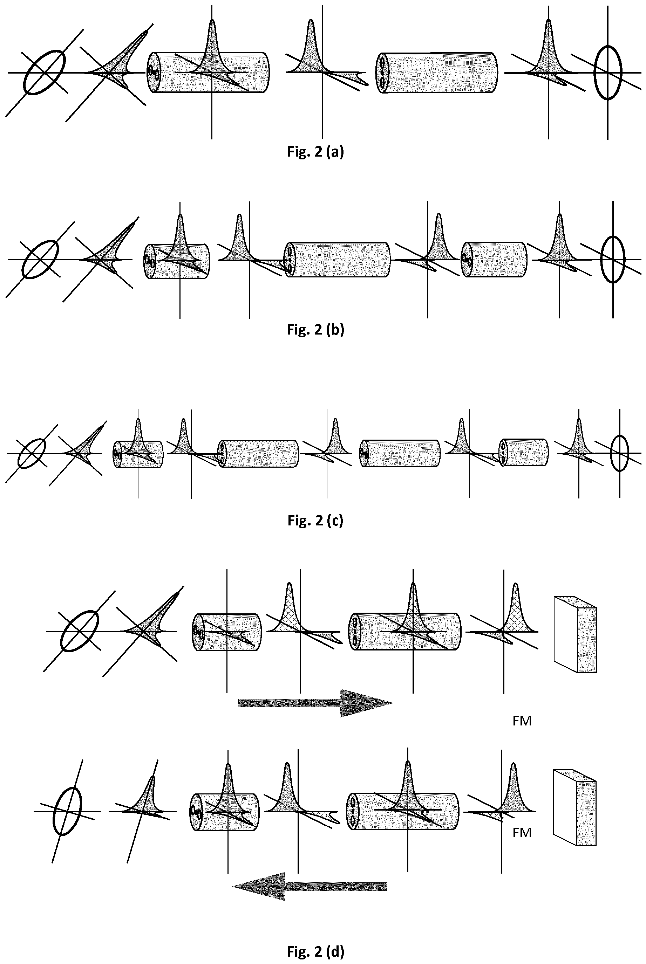

Fig. 2: presents exemplary schemes for realization of nonlinear polarization evolution in PM fibers. (a): The simplest case, not falling under the scope of the present invention: dividing the PM fiber into two equal sections allows for GVM compensation. In the first section, the horizontally polarized pulse outpaces the vertically polarized pulse, in the second (turned) section, the vertically polarized pulse catches up with the horizontally polarized pulse, thus allowing to assemble the two pulses into one. (b, c): schemes according to the invention, wherein, in addition to GVM compensation, a symmetrization of the spectrum and pulse time profile are achieved. In these schemes, the first and the last section of the fiber is shorter (wherein the sum of lengths of short sections is equal to the length of a longer section), thereby the outpacing pulse is swapped in each consecutive section. (d) : exemplary scheme not falling under the scope of the invention, similar to scheme (c), wherein pulses are reversed using a Faraday mirror (FM) turning polarization by 90 degrees. In the case shown in fig. (d), the section lengths are equal. In such a way, the pulse (denoted by a chequered pattern in the drawing), having vertical polarization in the upper part of the drawing, returns via the same fiber fragments as a pulse having horizontal polarization. This scheme allows to satisfy automatically the requirement of equalizing optical paths of both pulses.

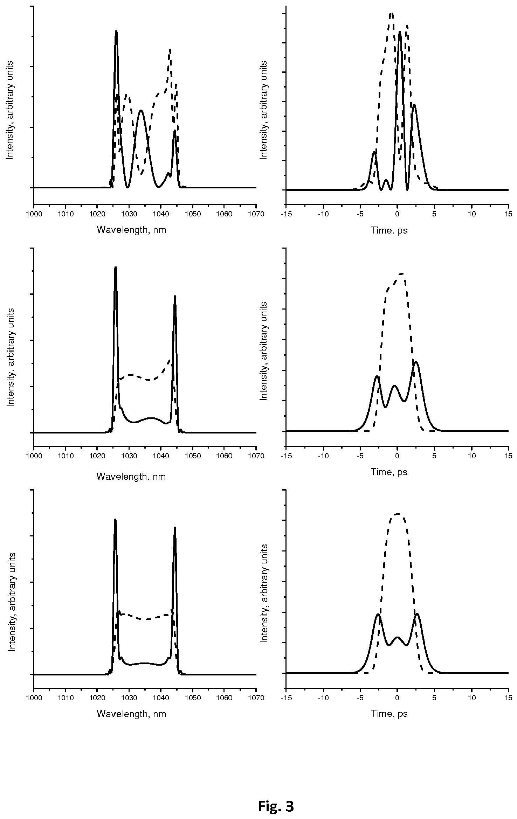

Fig. 3: presents theoretical time runs (left-hand side) and spectra (right-hand side) of the laser pulses following to travelling the arrangement of two (top side), three (middle) and eleven sections (bottom side) of the same total length (2 m). The extended pulse having linear polarization, Gaussian profile, duration of 3.3 ps (200 fs compressed) and energy of 6.5 nJ has been introduced into an arrangement of PM fiber sections at an angle providing distribution of the pulse into two pulses having perpendicular polarizations at an energy ratio of 30:70. A polarizer has been provided downstream the arrangement at the same angle. The runs for two polarizations distributed by the polarizer have been depicted by a solid curve and a broken curve, respectively. In the first case, two sections of equal lengths (1 m) are used; in the second and third case, the first and the last section are two times shorter than the other ones. An additional benefit is observed in these two latter cases, namely, symmetrization of the spectrum and time profile of the pulse.

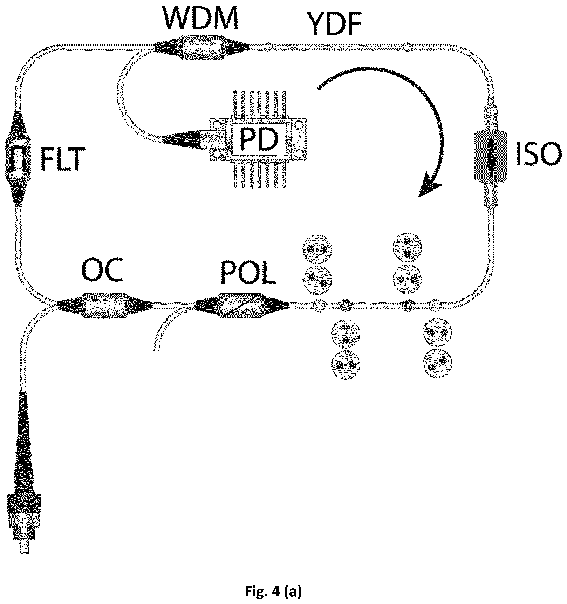

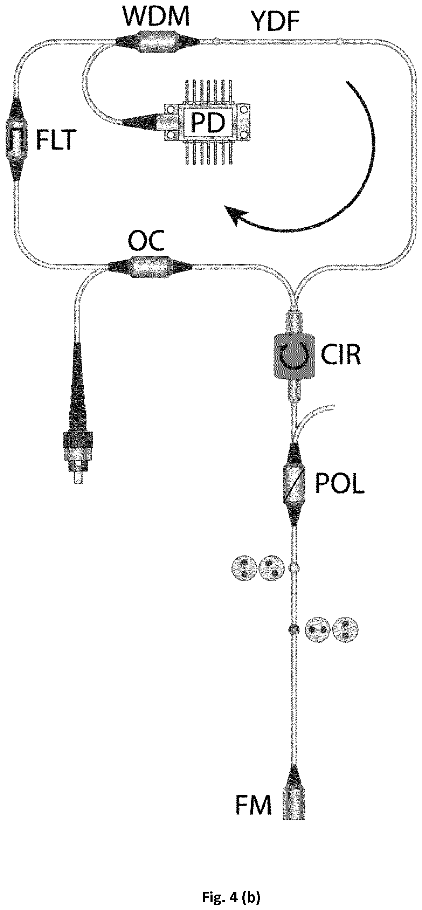

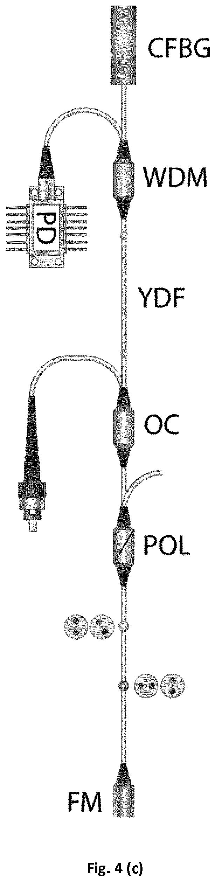

Fig. 4: presents (a) the scheme of an experimentally built ultrafast laser arrangement; (b) the preferred scheme of ultrafast laser arrangement, not requiring high accuracy of matching the fiber section lengths; (c) the preferred scheme of linear ultrafast laser arrangement. WDM - wave division multiplexerspectral coupler, YDF - ytterbium doped fiber, ISO - optical insulator, CIR circulator, POL - polarizer, FM - Faraday mirror, OC - optical coupler, FL T - spectral band-pass filter, PD - pumping laser diode.

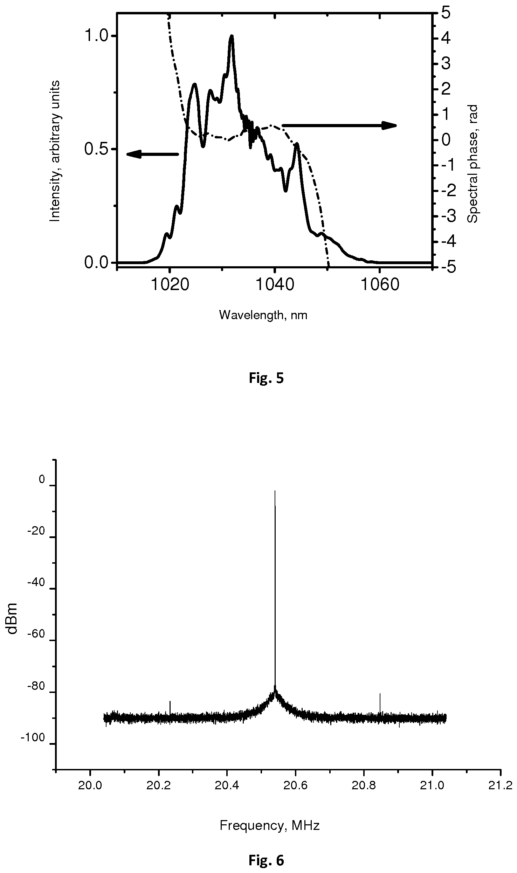

Fig. 5: The experimental spectrum of the all-fiber laser (solid curve) built according to the scheme shown in fig. 4(a). The broken curve represents the spectral phase of the laser pulse as recovered by SPIDER method following recompression in a grating compressor.
Fig. 6: The RF spectrum of an all-fiber laser oscillator built according to the scheme shown in fig. 4(a).

Dividing of the PM fiber into shorter sections, of which each consecutive section is turned by 90 degrees about the axis of the fiber, allows to considerably compensate the GVM effect. In such a situation, the directions of axes of "fast" sections having numbers 2n+ 1 (the first, third, fifth, and the following if present) are parallel each other, and, at the same time, they are perpendicular to the directions of axes of "fast" sections having numbers 2n (the second, fourth, *etc.).* The best compensation of the GVM effect is achieved when the total length of all sections having numbers 2n+ 1 is equal to the total length of all other sections *(i.e.,* having numbers 2n). Additionally, the fiber having this configuration still has the properties of polarization maintaining fibers. At the same time, this modification opens the possibility to embody the mechanism of saturable absorption based on NPE in PM fibers (fig. 2a).

The pulse of elliptical polarization entering the arrangement of sections is distributed into two pulses having polarizations perpendicular each other. In the case when the number of sections is more than two, and the lengths of the first and the last sections are chosen as shorter than the remaining ones (e.g., two times shorter than the inner sections), an additional benefit is achieved. In such a situation, the leading (outpacing) pulse is swapped in each consecutive section, what results in symmetrization of the spectrum and the time profile of the pulse. Fig. 2 (b) and (c) present the favorable dividing schemes, fig 3. presents the calculated time and spectral profiles for the pulses separated using a polarizer located downstream the arrangement of two (fig. 2(a)), three (fig. 2(b)), and eleven (fig 2(c)) sections of the same total length. Further dividing of the fiber into even shorter sections results in further diminishing the GVM (PMD) effect. For short pulses, it is preferred to use a larger number of sections, to achieve constant partial time overlap of the separated pulses, and thus to enhance the polarization evolution effect.

Equalizing the total length of all sections having numbers 2n+ 1 and the total length of all other sections (having numbers 2n) results in complete removing GVM. A very accurate equalizing of these lengths is also critical from the viewpoint of phase velocity of two polarization modes. In the case, when the lengths are not equal, the excess of the length of the fiber section acts as a waveplate, that causes a (potentially unwanted) additional polarization evolution. In such a situation, the scheme of fig. 2(c) is favorable, that may be also embodied in a ring configuration using a Faraday mirror (fig. 2(d), fig. 4(b)) or a linear configuration (fig. 4(c)). In such a situation, the polarizations of pulses reflected from the mirror are swapped. Each pulse moves twice through each fiber section, but, at the second time, the polarizations of pulses are swapped. As a result, each fiber section fulfils a double role in this process, thus assuring automatically equalizing the travelled length of fibers. Here, the CFBG mirror (Chirped Fiber Bragg Grating, fig. 4(c)) introduces additional chirp in the pulse frequencies (this regulates phase dependencies of the spectral components of the pulse) moving within a cavity in order to control the total dispersion of laser cavity or reflects the frequencies in a defined band around the central laser operating frequency (preferably 2 - 30 nm).

It is favorable to replace one of the shorter sections of the PM fiber of the saturable absorber with the one doped with active ions (for example, erbium Er, ytterbium Yb), and to separately pump this section with a laser diode. Such a solution allows more freely adjusting the operating conditions of the saturable absorber.

By applying the above-described PM NPE of the saturable absorber in all-fiber femtosecond laser, it was possible to demonstrate a stably operating laser cavity producing ultrashort laser pulses. Fig. 4(a) presents the experimental scheme of all-fiber ring laser cavity constructed entirely from PM fibers and using the PM NPE effect as a mechanism of saturable absorption. Fig. 5 and 6 present the recovered spectral profile and the spectral phase of a pulse obtained from the experimentally built laser configuration and the RF spectrum of the laser, respectively.

### LITERATURE REFERENCES:

- [1]: Matsas V. J. Matsas et al., "Self-starting passively mode-locked fibre ring soliton laser exploiting nonlinear polarisation rotation", Electron.Lett. 28, 1391 (1992)
- [2]: N. J. Doran and David Wood, "Nonlinear-optical loop mirror," Opt. Lett. 13, 56-58 (1988)
- [3]: M. E. Fermann, F. Haberl, M. Hofer, and H. Hochreiter, "Nonlinear amplifying loop mirror," Opt. Lett. 15, 752-754 (1990).
- [4]: S. Boivinet, J.-B. Lecourt, Y. Hernandez, A.A. Fotiadi, M. Wuilpart, P. Megret, "Impact of chromatic dispersion and spectral filtering in an all-fibermode-locked Ytterbium laser", Proc. of SPIE Vol. 9344, 934421
- [5]: S. Boivinet, J.-B. Lecourt, Y. Hernandez, A. Fotiadi, M. WUilpart, and P. Megret, "All-fiber laser based on NPE in PM fiber with two active sections," in 2015 European Conference on Lasers and Electro-Optics - European Quantum Electronics Conference, (Optical Society of America, 2015), paper CJ_2_2.
- [6]: Simon Boivinet, Jean-Bernard Lecourt, Yves Hernandez, Andrei A. Fotiadi, Marc Wuilpart, and Patrice Megret, "All-Fiber 1-µm PM Mode-Lock Laser Delivering Picosecond Pulses at Sub-MHz Repetition Rate", IEEE PHOTONICS TECHNOLOGY LETTERS, VOL. 26, NO. 22, NOVEMBER 15, 2014
- [7]: Carsten Krogh Nielsen and Soren Rud Keiding, "All-fiber mode-locked fiber laser", OPTICS LETTERS / Vol. 32, No. 11 / June 1, 2007

## Claims

1. A saturable absorber for use in an ultrafast fiber laser, wherein the saturable absorber comprises
an output polarizer (POL),
an arrangement of sections of a polarization maintaining, PM, fiber, of which the first section is arranged in such a way that the slow axis of the first fiber section is turned by an angle α with respect to the transmission axis of the output polarizer and is configured to receive an input pulse coupled to both axes of the PM fiber, and
each consecutive section is turned by 90 degrees about the axis of the fiber with respect to the previous section, in such a way that the slow axis of each fiber section is perpendicular to the slow axis of the adjacent fiber section,
and wherein the arrangement of sections comprises at least three sections in which the input pulse is propagating,
and the lengths of the at least three sections of the saturable absorber are chosen such that the total length of all the sections turned by 90 degrees with respect to the first section is equal to the total length of all other sections,
and wherein the length of the first section on the optical path of the pulses, and the last section, preferably of equal lengths, on the optical path of the pulses, is shorter, preferably two times shorter, than the length of the other sections,
and wherein the angle α is ranging from 0 to 45 degrees, and is chosen such that the saturable absorber operates on the basis of non-linear polarization evolution, NPE, so that, when it is used in the ultrafast fiber laser, the laser operates in pulse mode.

2. A saturable absorber according to claim 1,
**characterized in that** one of the fiber sections is doped with active ions, preferably of erbium or ytterbium, and is adjusted to be separately pumped with a laser diode (PD).

3. A saturable absorber according to anyone of the preceding claims, **characterized in that** it contains pulse reversing means turning its polarization arranged downstream the last fiber section of the arrangement of sections of the polarization maintaining PM fiber.

4. A saturable absorber according to claim 3,
**characterized in that** the pulse reversing means comprise a Faraday mirror (FM).

5. A saturable absorber according to claim 1, **characterized in that** the input pulse is polarized linearly or elliptically.

6. A method of mode-locking in a fiber laser, **characterized in that** a saturable absorber according to any one of claims 1 to 5 is used as the saturable absorber.

7. A method of mode-locking according to claim 6, **characterized in that** the length and the number of fiber sections are adjusted such that for a given pulse length the pulses decomposed in the fiber constantly partially overlap in time.

## Patentansprüche

1. Sättigbarer Absorber zur Verwendung in ultrakurzen Faserlasern, **dadurch gekennzeichnet, dass** der sättigbare Absorber umfasst:
einen Ausgangspolarisator,
eine Anordnung von Abschnitten einer polarisationserhaltenden PM-Faser, von denen der erste Abschnitt in einer solchen Art und Weise angeordnet ist,
dass die langsame Achse des ersten Faserabschnitts um einen Winkel α in Bezug auf die Transmissionsachse des Ausgangspolarisators gedreht ist,
und so konfiguriert ist, um den mit beiden Achsen der PM-Faser gekoppelten Eingangspuls zu empfangen,
und jeder nachfolgende Abschnitt in Bezug auf den vorherigen Abschnitt um 90 Grad um die Faserachse gedreht ist,
so dass die langsame Achse jedes Faserabschnitts zur langsamen Achse des benachbarten Faserabschnitts senkrecht positioniert ist,
und
wobei die Anordnung von Abschnitten mindestens drei Abschnitte umfasst, in denen sich der Eingangspuls ausbreitet,
und
die Längen der mindestens drei Abschnitte des sättigbaren Absorbers so gewählt sind,
dass die Gesamtlänge von allen um 90 Grad, in Bezug auf den ersten Abschnitt, gedrehten Abschnitten der Gesamtlänge der allen übrigen Abschnitte gleich ist.
und
wobei die Länge des ersten Abschnitts auf dem optischen Pfad der Pulse und des letzten Abschnitts, vorzugsweise von gleicher Länge, auf dem optischen Pfad der Pulse kürzer ist, vorzugsweise zweimal kürzer ist, als die Länge der anderen Abschnitte,
und wobei der Winkel α von 0 bis 45 Grad reicht und so gewählt ist, dass der sättigbare Absorber auf Basis nichtlinearer Polarisationsentwicklung, NPE, arbeitet, sodass wenn in einem ultrakurzen Faserlaser verwendet, der Laser arbeitet im Impulsmodus.

2. Sättigbarer Absorber nach Anspruch 1, **dadurch gekennzeichnet, dass** einer der Faserabschnitte mit aktiven Ionen, vorzugsweise von Erbium oder Ytterbium, dotiert und auf separates Pumpen mit einer Laserdiode (PD) eingestellt ist.

3. Sättigbarer Absorber nach einem der vorangehenden Ansprüche, **dadurch gekennzeichnet, dass** er Impulsumkehrmittel, die seine Polarisation drehen, enthält und die stromabwärts des letzten Faserabschnitts der Anordnung von Abschnitten einer polarisationserhaltenden PM-Faser angeordnet sind.

4. Sättigbarer Absorber nach Anspruch 3, **dadurch gekennzeichnet, dass** die Impulsumkehrmittel einen Faraday-Spiegel (FM) umfassen.

5. Sättigbarer Absorber nach Anspruch 1, **dadurch gekennzeichnet, dass** der Eingangspuls linear oder elliptisch polarisiert ist.

6. Verfahren zur Modenkopplung in einem Faserlaser, **dadurch gekennzeichnet, dass** als der sättigbare Absorber ein sättigbarer Absorber nach irgendeinem der Ansprüche von 1 bis 5 verwendet wird.

7. Verfahren zur Modenkopplung nach Anspruch 6, **dadurch gekennzeichnet, dass** die Länge und die Anzahl der Faserabschnitte so eingestellt werden, dass sich bei einer gegebenen Pulslänge die in der Faser verteilte Pulse zeitlich ständig teilweise überlappen.

## Revendications

1. Absorbant saturable pour utilisation dans un laser à fibre ultrarapides, **caractérisé en ce que** l'absorbant saturable contient :
un polariseur de sortie (POL),
un ensemble de tronçons de la fibre à maintien de polarisation PM, dont la première tronçon est agencée de telle manière que l'axe lent de la première tronçon de la fibre est tourné de l'angle α par rapport à l'axe de transmission du polariseur de sortie et est configuré pour obtenir un impulsion d'entrée couplée aux deux axes de la fibre PM, et chaque tronçon successif est tourné de 90 degrés autour de l'axe de la fibre par rapport au tronçon précédent, de telle sorte que l'axe lent de chaque tronçon de fibre soit perpendiculaire à l'axe lent du tronçon adjacent de la fibre,
et dans lequel l'ensemble de tronçons comprend au moins trois tronçons dans lesquelles l'impulsion d'entrée se propage,
et les longueurs d'au moins trois tronçons de l'absorbant saturable sont choisies de manière telle que la longueur totale de toutes les tronçons est tourné de 90 degrés par rapport au premier tronçon est égale à la longueur totale de toutes autres tronçons, et dans lequel la longueur du premier tronçon dans le chemin optique des impulsions et du dernière tronçon, de préférence de longueur égale, dans le chemin optique des impulsions, est plus courte, de préférence deux fois plus courte, que la longueur des autres tronçons,
et où l'angle α est compris entre 0 et 45 degrés, et est sélectionné de telle manière que l'absorbant saturable fonctionne sur la base de l'évolution non linéaire de la polarisation, NPE, telle que si l'absorbant saturable est utilisé dans le laser à fibre ultrarapide, le laser fonctionne en mode pulsé.

2. Absorbant saturable selon la revendication 1, **caractérisé en ce que** l'un des tronçons de fibre est dopé en ions actifs, de préférence de l'erbium ou l'ytterbium, et est apte à être pompé séparément au moyen d'une diode laser (PD).

3. Absorbant saturable selon l'une quelconque des revendications précédentes, **caractérisé en ce qu'il** comprend des moyens d'inversion d'impulsions tournant sa polarisation, positionnés en aval du dernier tronçon de fibre de l'ensemble de tronçons de fibre PM à maintien de polarisation.

4. Absorbant saturable selon la revendication 3, **caractérisé en ce que** les moyens d'inversion d'impulsions comprennent un miroir de Faraday (FM).

5. Absorbant saturable selon la revendication 1, **caractérisé en ce que** l'impulsion d'entrée est polarisée linéairement ou elliptiquement.

6. Procédé de blocage de mode dans un laser à fibre, **caractérisé en ce que** l'absorbant saturable est un absorbant saturable selon l'une quelconque des revendications de 1 à 5.

7. Procédé de blocage de mode selon la revendication 6, **caractérisé en ce que** la longueur et le nombre de tronçons de fibre sont ajustés de telle sorte que, pour une longueur d'impulsion donnée, les impulsions réparties sur la fibre se recouvrent constamment partiellement dans le temps.
